# EUROPEAN PATENT APPLICATION

(11) **EP 4 773 581 A1**
(43) Date of publication of application: **08.07.2026**
(21) Application number: 24870446.2
(22) Date of filing: 11.09.2024
(51) Int. Cl.: H04L 67/63

(54) **INFORMATION PROCESSING METHOD AND APPARATUS**

(30) Priority: 28.09.2023 CN 202311294155
(71) Applicant: HUAWEI TECHNOLOGIES CO., LTD., Shenzhen 518129 (CN)
(72) Inventor: ZHUANG, Shunwan, Shenzhen, Guangdong 518129 (CN); PANG, Donglei, Shenzhen, Guangdong 518129 (CN); SHENG, Cheng, Shenzhen, Guangdong 518129 (CN); SHI, Hang, Shenzhen, Guangdong 518129 (CN); WANG, Haibo, Shenzhen, Guangdong 518129 (CN)
(74) Representative: Gill Jennings & Every LLP
(86) International application number: PCT/CN2024/118219
(87) International publication number: WO 2025/066902

(57) **Abstract**

Embodiments of this application disclose an information processing method. The method may be applied to, for example, a target apparatus. The target apparatus may obtain a BGP message, where an address family of the BGP message is a BGP LS address family, the BGP message includes indication information, and the indication information indicates a link type of a link between a first point of presence POP in an SD-WAN network and a second POP in the SD-WAN network. In this solution, the BGP message of the LS address family may be used to carry the type of the link between the POPs, to facilitate subsequent service path orchestration for a service based on the type of the link between the POPs, so that service requirements are met.

## Description

This application claims priority to Chinese Patent Application No. 2023112941556, filed with the China National Intellectual Property Administration on September 28, 2023, and entitled "INFORMATION PROCESSING METHOD AND APPARATUS", which is incorporated herein by reference in its entirety.

### TECHNICAL FIELD

This application relates to the communication field, and in particular, to an information processing method and apparatus.

### BACKGROUND

In current wide area networks (wide area network, WAN), end-to-end rapid delivery and flexible scheduling are typically achieved using a software-defined networking in a wide area network (software-defined networking in a wide area network, SD-WAN) technology. On a basis of different underlay (underlay) networks such as an internet (internet) network and a private line network, SD-WAN tunnels are established to construct an SD-WAN-based overlay (overlay) network, allowing decoupling wide area network services from the underlay network, and improving end-to-end delivery capabilities. The SD-WAN-based overlay network may be simply referred to as an SD-WAN network.

In some scenarios, an end-to-end path across the SD-WAN network may be computed in advance for services. However, current end-to-end path computation approaches cannot fully meet service requirements.

In view of this, there is an urgent need for a solution to resolve the foregoing problem.

### SUMMARY

Embodiments of this application provide an information processing method and apparatus, to facilitate service path orchestration, so that a service requirement is better met.

According to a first aspect, an embodiment of this application provides an information processing method, and the method may be applied to, for example, a target apparatus. The target apparatus may obtain a border gateway protocol (Border Gateway Protocol, BGP) message, where an address family of the BGP message is a BGP link state (link state, LS) address family, the BGP message includes indication information, and the indication information indicates a link type of a link between a first point of presence (point of presence, POP) and a second POP. In this solution, the BGP message of the LS address family may be used to carry the type of the link between the POPs, to facilitate subsequent service path orchestration for a service based on the type of the link between the POPs, so that service requirements are met.

In a possible implementation, the link type indicated by the indication information may be an overlay link, an underlay link, a direct link, a private line, a multi-protocol label switching (Multi-Protocol Label Switching, MPLS) link, a segment routing over internet protocol version 6 (Segment Routing Internet Protocol Version 6, SRv6) link, an internet (internet) link, a 4th generation mobile communication technology (the 4th generation mobile communication technology, 4G) link, a 5th generation mobile communication technology 5G (5th generation mobile communication technology, 5G) link, or a 5th generation mobile communication technology plus (5th generation mobile communication technology plus, 5G+) link. When the link type indicated by the indication information is the MPLS link, the SRv6 link, the internet link, the 4G link, the 5G link, or the 5G+ link, the indication information may naturally indicate that the link type of the link between the first POP and the second POP is the overlay link. When the link type indicated by the indication information is the direct link or the private line, the indication information may naturally indicate that the link type of the link between the first POP and the second POP is the underlay link.

In a possible implementation, considering that link network layer reachability information (network layer reachability information, NLRI) of a border gateway protocol link state shortest path first (BGP-LS-shortest path first, BGP-LS-SPF) address family may be used to advertise link information, in a specific example, the sub-address family of the BGP message may be an SPF sub-address family. In other words, in this embodiment of this application, the feature that the BGP-LS-SPF can advertise link information is still used, and the BGP message of the BGP-LS-SPF address family is used to carry the indication information. The BGP-LS-SPF address family may also be referred to as a BGP-SPF address family for short.

In a possible implementation, when the sub-address family of the BGP message is the SPF sub-address family, the BGP message may include a link type type length value (type length value, TLV), and the link type TLV is used to carry the indication information. A communication apparatus that receives the BGP message may parse the link type TLV to obtain the indication information. Correspondingly, the link type of the link between the first POP and the second POP may be determined based on the indication information. In a possible implementation, the BGP message may include a BGP path attribute, and the link type TLV may be carried in the BGP path attribute. In other words, the BGP path attribute may include the link type TLV. In a specific example, the BGP path attribute may be a BGP LS attribute. In this case, the communication apparatus that receives the BGP message may parse the BGP LS attribute to obtain the link type TLV, and further obtain the indication information based on the link type TLV. Correspondingly, the link type of the link between the first POP and the second POP may be determined based on the indication information.

In a possible implementation, the target apparatus may be the first POP. In this case, during specific implementation, the first POP may obtain the BGP message by generating the BGP message. As an example, after generating the BGP message, the first POP may send the BGP message, for example, send the BGP message to another POP and/or a controller.

In a possible implementation, the target apparatus may be a controller. In this case, during specific implementation, the controller may obtain the BGP message by receiving the BGP message. As an example, the controller may receive the BGP message sent by the first POP.

In a possible implementation, the target apparatus may receive path computation constraint information, where the path computation constraint information indicates a requirement for a link type of a link to a destination network prefix. In this way, an apparatus for service path orchestration may perform service path orchestration based on the path computation constraint information, to obtain, through orchestration to the greatest extent, a service path that meets the path computation constraint information, so that service requirements are met.

In a possible implementation, when the target apparatus is the first POP, after receiving the path computation constraint information, the target apparatus may send the path computation constraint information to the controller, and the controller computes, based on the path computation constraint information, a service path to the destination network prefix.

In a possible implementation, after receiving the path computation constraint information, the target apparatus may compute, based on the path computation constraint information, the service path to the destination network prefix.

In a possible implementation, the requirement for the link type of the link to the destination network prefix may include: a link type that needs to be included in the link to the destination network prefix. In this case, the link type that needs to be included in the link to the destination network prefix may be specified, so that when computing the service path, the first POP or the controller obtains, through computation to the greatest extent, a service path of a link that includes the link type that needs to be included. In this way, a service requirement is met.

In a possible implementation, the requirement for the link type of the link to the destination network prefix may include: a link type that needs to be excluded from the link to the destination network prefix. In this case, the link type that needs to be excluded from the link to the destination network prefix may be specified, so that when computing the service path, the first POP or the controller obtains, through computation to the greatest extent, a service path of a link that does not include the link type that needs to be excluded. In this way, a service requirement is met.

In a possible implementation, if the requirement includes the link type that needs to be included in the link to the destination network prefix, the path computation constraint information may include a first TLV. The first TLV may be, for example, an include link-type (Include Link-Type) TLV, and the first TLV indicates the link type that needs to be included in the link to the destination network prefix.

In a possible implementation, if the requirement includes the link type that needs to be excluded from the link to the destination network prefix, the path computation constraint information may include a second TLV. The second TLV may be, for example, an exclude link-type (Exclude Link-Type) TLV, and the second TLV indicates the link type that needs to be excluded from the link to the destination network prefix.

In a possible implementation, the path computation constraint information may be carried in an SD-WAN transport network port (transport network port, TNP) route advertisement message. In other words, during specific implementation of receiving a route advertisement message, the SD-WAN TNP route advertisement message may be received, and the SD-WAN TNP route advertisement message includes the path computation constraint information. For example, the SD-WAN TNP route advertisement message includes the first TLV and/or the second TLV.

In a possible implementation, the path computation constraint information may be carried in an extended port attribute sub-TLV (Extended Port Attribute Sub-TLV) in the SD-WAN TNP route advertisement message. Specifically, the first TLV and/or the second TLV may be used as a sub-sub-TLV of the extended port attribute sub-TLV. In this case, the target apparatus may parse the extended port attribute sub-TLV in the SD-WAN TNP route advertisement message to obtain the path computation constraint information.

In a possible implementation, the SD-WAN TNP route advertisement message may include a first metadata path attribute, and the first TLV and/or the second TLV may be carried in the first metadata path attribute (Metadata Path Attribute). In this case, the target apparatus may parse the first metadata path attribute in the SD-WAN TNP route advertisement message, to obtain the path computation constraint information.

In a possible implementation, the path computation constraint information may be carried in a path computation element protocol (Path Computation Element Protocol, PCEP) message. In other words, during specific implementation of receiving a route advertisement message, the PCEP message may be received, and the PCEP message includes the path computation constraint information. In a specific example, the PCEP message may include a first object and/or a second object, the first object is used to carry the first TLV, and the second object is used to carry the second TLV. The first object and the second object may be newly extended objects. In another specific example, the first TLV and the second TLV may be carried in an existing PCEP object. For example, the existing PCEP object may be extended to carry the first TLV and the second TLV.

In a possible implementation, the path computation constraint information may be carried in a BGP outbound route filter (outbound route filters, ORF) message. In other words, during specific implementation of receiving a route advertisement message, the BGP ORF message may be received, and the BGP ORF message includes the path computation constraint information. For example, the BGP ORF message includes the first TLV and/or the second TLV. In a specific example, the BGP ORF message may include a second metadata path attribute, and the first TLV and/or the second TLV may be carried in the second metadata path attribute.

In a possible implementation, the path computation constraint information may be carried in an overlay management protocol (Overlay Management Protocol, OMP) message. In an example, the first TLV and the second TLV may be carried in a data (data) field of the OMP message.

According to a second aspect, an embodiment of this application provides an information processing method, and the method may be applied to, for example, a target apparatus. The target apparatus may be a controller or a first POP. The target apparatus may receive path computation constraint information, where the path computation constraint information indicates a requirement for a link type of a link to a destination network prefix. In this way, an apparatus for service path orchestration may perform service path orchestration based on the path computation constraint information, to obtain, through orchestration to the greatest extent, a service path that meets the path computation constraint information, so that service requirements are met.

In a possible implementation, the method is applied to the first POP, and the method further includes: sending information about the destination network prefix and the link type requirement to a controller.

In a possible implementation, the requirement includes: a link type that needs to be included in the link to the destination network prefix, and/or a link type that needs to be excluded from the link to the destination network prefix.

In a possible implementation, the path computation constraint information includes an include link-type TLV and/or an exclude link-type TLV, the include link-type TLV indicates the link type that needs to be included in the link to the destination network prefix, and the exclude link-type TLV indicates the link type that needs to be excluded from the link to the destination network prefix.

In a possible implementation, the receiving the path computation constraint information includes: receiving a software-defined wide area network transport network port SD-WAN TNP route advertisement message, where the SD-WAN TNP route advertisement message includes the path computation constraint information.

In a possible implementation, the SD-WAN TNP route advertisement message includes an extended port attribute sub-TLV, and the extended port attribute sub-TLV includes the path computation constraint information.

In a possible implementation, the SD-WAN TNP route includes a first metadata path attribute, and the first metadata path attribute includes the path computation constraint information.

In a possible implementation, the receiving the path computation constraint information includes: receiving a path computation element protocol PCEP message, where the PCEP message includes the path computation constraint information.

In a possible implementation, the receiving the path computation constraint information includes: receiving a BGP outbound route filter ORF message, where the BGP ORF message includes the path computation constraint information.

In a possible implementation, the receiving the path computation constraint information includes: receiving an overlay management protocol OMP message, where the OMP message includes the path computation constraint information.

According to a third aspect, an embodiment of this application provides an information processing method, where the method includes: obtaining path computation constraint information, and sending the path computation constraint information, where the path computation constraint information indicates a requirement for a link type of a link to a destination network prefix. In this way, an apparatus for service path orchestration may perform service path orchestration based on the path computation constraint information, to obtain, through orchestration to the greatest extent, a service path that meets the path computation constraint information, so that service requirements are met.

In a possible implementation, the requirement includes: a link type that needs to be included in the link to the destination network prefix, and/or a link type that needs to be excluded from the link to the destination network prefix.

In a possible implementation, the path computation constraint information includes an include link-type TLV and/or an exclude link-type TLV, the include link-type TLV indicates the link type that needs to be included in the link to the destination network prefix, and the exclude link-type TLV indicates the link type that needs to be excluded from the link to the destination network prefix.

In a possible implementation, the sending the path computation constraint information includes: sending a software-defined wide area network transport network port SD-WAN TNP route advertisement message, where the SD-WAN TNP route advertisement message includes the path computation constraint information.

In a possible implementation, the SD-WAN TNP route advertisement message includes an extended port attribute sub-TLV, and the extended port attribute sub-TLV includes the path computation constraint information.

In a possible implementation, the SD-WAN TNP route includes a first metadata path attribute, and the first metadata path attribute includes the path computation constraint information.

In a possible implementation, the sending the path computation constraint information includes: sending a path computation element protocol PCEP message, where the PCEP message includes the path computation constraint information.

In a possible implementation, the sending the path computation constraint information includes: sending a BGP outbound route filter ORF message, where the BGP ORF message includes the path computation constraint information.

In a possible implementation, the sending the path computation constraint information includes: sending an overlay management protocol OMP message, where the OMP message includes the path computation constraint information.

According to a fourth aspect, an embodiment of this application provides an information processing apparatus, where the information processing apparatus includes a transceiver unit and/or a processing unit, the transceiver unit is configured to perform a receiving and sending operation, and the processing unit is configured to perform another operation other than the receiving and sending operation. The transceiver unit may include a receiving unit and/or a sending unit, where the receiving unit is configured to perform a receiving operation, and the sending unit is configured to perform a sending operation.

In a specific example, the information processing apparatus is configured to perform the method according to any implementation of the first aspect. In this case, the information processing apparatus may specifically include: an obtaining unit, configured to obtain a border gateway protocol BGP message, where the BGP message includes indication information, the indication information indicates a link type of a link between a first point of presence POP and a second POP, and an address family of the BGP message is a BGP link state LS address family.

In a possible implementation, the obtaining unit may be specifically a receiving unit, configured to receive the BGP message.

In another possible implementation, the obtaining unit may be specifically a processing unit, configured to generate the BGP message.

In a possible implementation, the indication information indicates that the link type is: an overlay (overlay) link, an underlay (underlay) link, a direct link, a private line, a multi-protocol label switching MPLS link, a segment routing over internet protocol version 6 SRv6 link, an internet (internet) link, a 4th-generation mobile communication technology 4G link, a 5th-generation mobile communication technology 5G link, or a 5th-generation mobile communication technology plus 5G+ link.

In a possible implementation, a sub-address family of the BGP message is a shortest path first SPF sub-address family.

In a possible implementation, the BGP message includes a link type type length value TLV, and the link type TLV includes the indication information.

In a possible implementation, the BGP message includes a BGP LS attribute, and the BGP LS attribute includes the link type TLV.

In a possible implementation, the apparatus is used in the first POP or a controller.

In a possible implementation, when the obtaining unit 501 is specifically the receiving unit, the receiving unit is further configured to: receive path computation constraint information, where the path computation constraint information indicates a requirement for a link type of a link to a destination network prefix.

In a possible implementation, when the obtaining unit 501 is specifically the processing unit, the apparatus further includes a receiving unit, configured to: receive path computation constraint information, where the path computation constraint information indicates a requirement for a link type of a link to a destination network prefix.

In a possible implementation, the apparatus is used in the first POP, and the apparatus further includes: a sending unit, configured to send information about the destination network prefix and the link type requirement to a controller.

In a possible implementation, the requirement includes: a link type that needs to be included in the link to the destination network prefix, and/or a link type that needs to be excluded from the link to the destination network prefix.

In a possible implementation, the path computation constraint information includes an include link-type TLV and/or an exclude link-type TLV, the include link-type TLV indicates the link type that needs to be included in the link to the destination network prefix, and the exclude link-type TLV indicates the link type that needs to be excluded from the link to the destination network prefix.

In a possible implementation, the receiving unit is specifically configured to: receive a software-defined wide area network transport network port SD-WAN TNP route advertisement message, where the SD-WAN TNP route advertisement message includes the path computation constraint information.

In a possible implementation, the SD-WAN TNP route advertisement message includes an extended port attribute sub-TLV, and the extended port attribute sub-TLV includes the path computation constraint information.

In a possible implementation, the SD-WAN TNP route includes a first metadata path attribute, and the first metadata path attribute includes the path computation constraint information.

In a possible implementation, the receiving unit is specifically configured to: receive a path computation element protocol PCEP message, where the PCEP message includes the path computation constraint information.

In a possible implementation, the receiving unit is specifically configured to: receive a BGP outbound route filter ORF message, where the BGP ORF message includes the path computation constraint information.

In a possible implementation, the receiving unit is specifically configured to: receive an overlay management protocol OMP message, where the OMP message includes the path computation constraint information.

In another specific example, the information processing apparatus is configured to perform the method according to any implementation of the second aspect. In this case, the information processing apparatus may specifically include: a receiving unit, configured to receive path computation constraint information, where the path computation constraint information indicates a requirement for a link type of a link to a destination network prefix.

In still another specific example, the information processing apparatus is configured to perform the method according to any implementation of the third aspect. In this case, the information processing apparatus may specifically include an obtaining unit and a sending unit. The obtaining unit is configured to obtain path computation constraint information, where the path computation constraint information indicates a requirement for a link type of a link to a destination network prefix; and the sending unit is configured to send the path computation constraint information.

In a possible implementation, the obtaining unit may be specifically a receiving unit, configured to receive the path computation constraint information.

In another possible implementation, the obtaining unit may be specifically a processing unit, configured to generate the path computation constraint information.

According to a fifth aspect, an embodiment of this application provides a communication apparatus that includes a processor and a memory.

The memory is configured to store instructions; and the processor is configured to execute the instructions, to enable the communication apparatus to perform the method according to the first aspect or any implementation of the first aspect, or enable the communication apparatus to perform the method according to the second aspect or any implementation of the second aspect, or enable the communication apparatus to perform the method according to the third aspect or any implementation of the third aspect.

According to a sixth aspect, an embodiment of this application provides a computer-readable storage medium that includes instructions or a computer program. When the instructions or the computer program is run on a processor, the method according to the first aspect or any implementation of the first aspect is implemented, or the method according to the second aspect or any implementation of the second aspect is implemented, or the method according to the third aspect or any implementation of the third aspect is implemented.

According to a seventh aspect, an embodiment of this application provides a computer program product that includes a computer program. When the computer program is run on a processor, the method according to the first aspect or any implementation of the first aspect is implemented, or the method according to the second aspect or any implementation of the second aspect is implemented, or the method according to the third aspect or any implementation of the third aspect is implemented.

According to an eighth aspect, an embodiment of this application provides a communication system. The communication system includes a communication apparatus that performs the method according to the second aspect or any implementation of the second aspect, and a communication apparatus that performs the method according to the third aspect or any implementation of the third aspect.

### BRIEF DESCRIPTION OF DRAWINGS

To describe the solutions in embodiments of this application or in the conventional technology more clearly, the following briefly describes the accompanying drawings for describing embodiments or the prior art. It is clear that the accompanying drawings in the following descriptions show merely some embodiments of this application, and a person of ordinary skill in the art may still derive other drawings from these accompanying drawings without creative efforts.
FIG. 1a is a diagram of an example of an application scenario according to an embodiment of this application;
FIG. 1b is a diagram of another example of an application scenario according to an embodiment of this application;
FIG. 1c is a diagram of still another example of an application scenario according to an embodiment of this application;
FIG. 2a is a diagram of a structure of a BGP message header according to an embodiment of this application;
FIG. 2b is a diagram of a structure of MP_REACH_NLRI according to an embodiment of this application;
FIG. 2c is a diagram of a structure of link-state NLRI according to an embodiment of this application;
FIG. 2d is a diagram of a structure of a BGP route update message according to an embodiment of this application;
FIG. 2e is a diagram of a structure of a PCEP message according to an embodiment of this application;
FIG. 2f is a diagram of a structure of an OMP message according to an embodiment of this application;
FIG. 3 is a schematic flowchart of an information processing method according to an embodiment of this application;
FIG. 4a is a diagram of a structure of a link type TLV according to an embodiment of this application;
FIG. 4b is a diagram of a structure of a first TLV according to an embodiment of this application;
FIG. 4c is a diagram of a structure of a second TLV according to an embodiment of this application;
FIG. 4d is a diagram of a structure of an LSPA object according to an embodiment of this application;
FIG. 4e is a diagram of a structure of an RP object according to an embodiment of this application;
FIG. 5 is a diagram of a structure of an information processing apparatus according to an embodiment of this application;
FIG. 6 is a diagram of a structure of another information processing apparatus according to an embodiment of this application;
FIG. 7 is a diagram of a structure of still another information processing apparatus according to an embodiment of this application;
FIG. 8 is a diagram of a structure of a communication apparatus according to an embodiment of this application; and
FIG. 9 is a diagram of a structure of a communication apparatus according to an embodiment of this application.

### DESCRIPTION OF EMBODIMENTS

Embodiments of this application provide a traffic forwarding method and apparatus, to facilitate service path orchestration, so that a path obtained through orchestration better meets a service requirement.

For ease of understanding, a possible application scenario of embodiments of this application is first described.

After SD-WAN is deployed, based on an original underlay network, an SD-WAN overlay network in the wide area network establishes SD-WAN tunnels between POPs and between a customer-premises equipment (customer-premises equipment, CPE) and an edge access point of presence (edge point of presence, EPOP). Service traffic passes through an intermediate device through the tunnel, so that the intermediate device is unaware of the service.

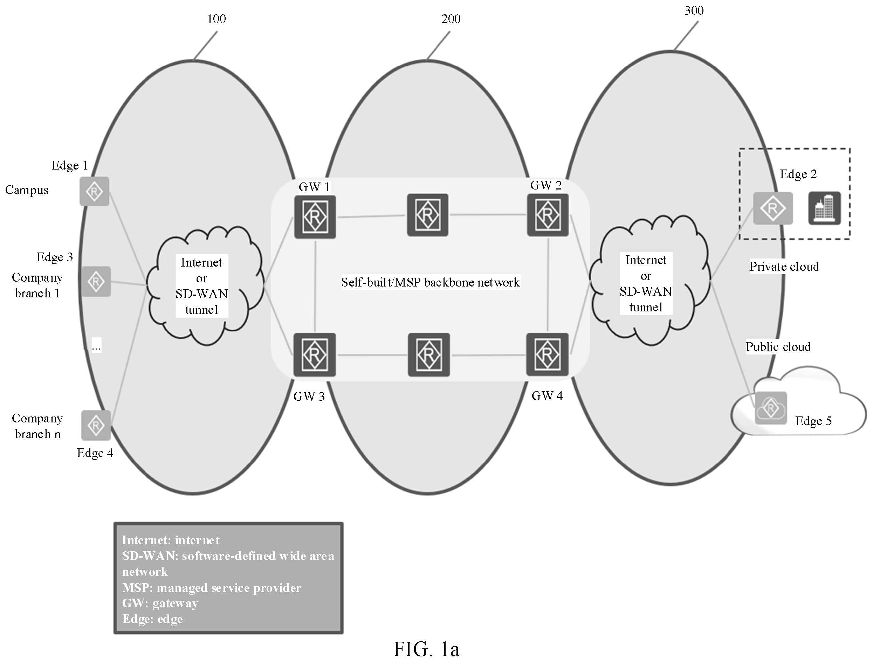

FIG. 1a is a diagram of an example of an application scenario according to an embodiment of this application. As shown in FIG. 1a, service traffic needs to be transmitted across an edge access area 100, a backbone network 200, and an edge access area 300. Specifically:
The backbone network 200 is an SD-WAN overlay network.

The edge access network 100 includes: a site edge 1, a site edge 3, and a site edge 4.

The backbone network 200 includes at least one network device. For example, when the backbone network 200 is a POP backbone network, the backbone network 200 includes at least one POP, and in the POP backbone network, a POP connected to a site edge is referred to as an EPOP, and a POP not connected to a site edge is referred to as a backbone point of presence (backbone point of presence, BPOP). In an example, the site edge may be a CPE.

The edge access network 300 includes: a site edge 2 and a site edge 5.

The site edge in the edge access network 100 and the edge access network 300 may access the backbone network through the EPOP in the backbone network, and the EPOP in the backbone network used by the site edge to access the backbone network may be considered as a gateway corresponding to the site edge. For example, as shown in FIG. 1a, the site edge 1 is dual-homed and accesses a gateway (gateway, GW) 1 and a gateway 3, and the site edge 1 may access the backbone network 200 through the gateway 1 and the gateway 3. For another example, the site edge 2 is dual-homed and accesses a gateway 2 and a gateway 4, and the site edge 2 may access the backbone network 200 through the gateway 2 and the gateway 4.

The site edge may access a corresponding gateway through an SD-WAN tunnel or internet. The gateway is the POP in the backbone network 200.

In this embodiment of this application, the backbone network may be a hybrid network that includes at least one network domain. The at least one network domain includes but is not limited to: a self-built backbone network and/or a managed service provider (managed service provider, MSP) backbone network. The MSP backbone network may include a single operator network, or may include a hybrid operator network, or may include a self-built private line network. This is not specifically limited in this embodiment of this application. An MPLS technology or an SRv6 technology may be applied to the backbone network. This is not specifically limited in this embodiment of this application.

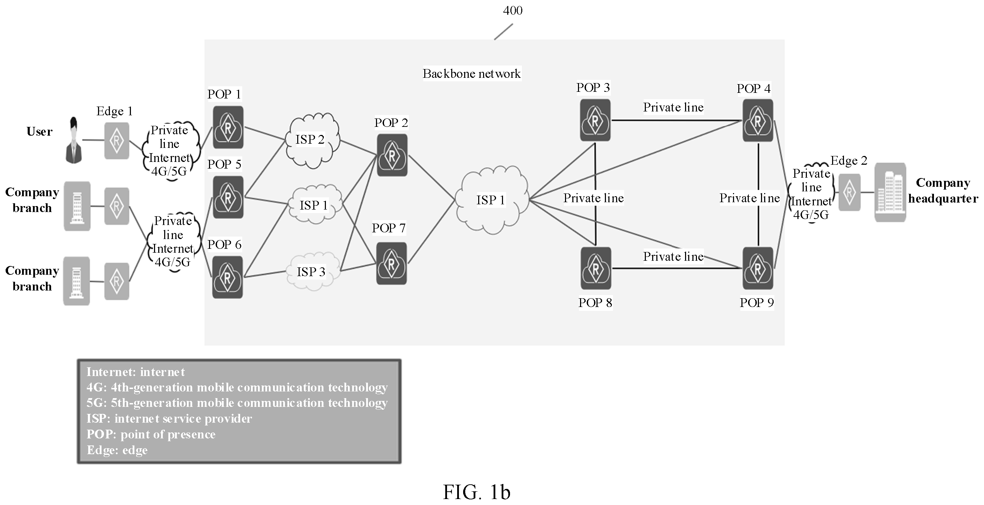

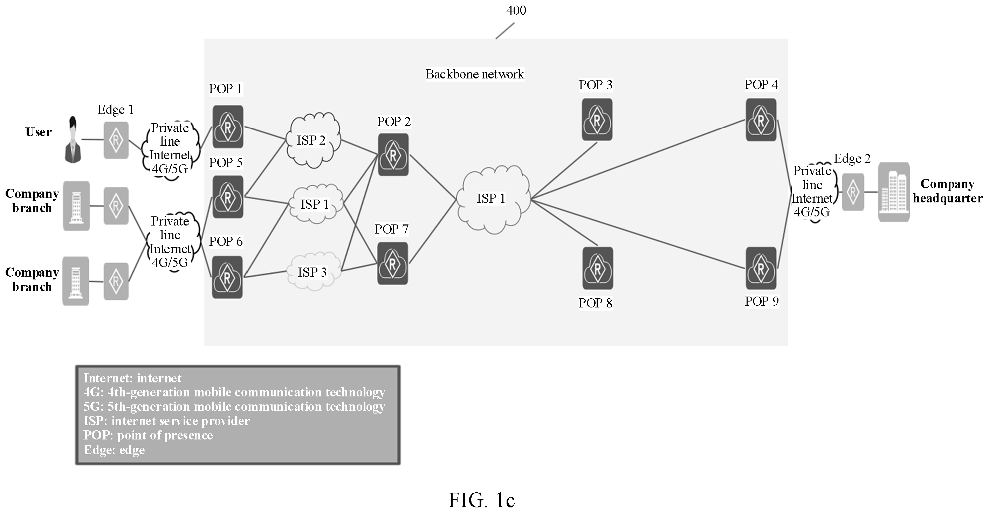

Refer to FIG. 1b and FIG. 1c for understanding. FIG. 1b and FIG. 1c are diagrams of two other examples of application scenarios according to an embodiment of this application.

As shown in FIG. 1b, a backbone network 400 includes: an internet service provider (internet service provider, ISP) network 1 (ISP 1 for short), an ISP 2, an ISP 3, and a self-built private line network. The scenario shown in FIG. 1c is different from that shown in FIG. 1b in that a backbone network 500 shown in FIG. 1c does not include the self-built private line network.

A connection manner between network devices in network architectures shown in FIG. 1b and FIG. 1c is not described in detail herein.

Currently, a service path across the backbone network 200 may be orchestrated for a service. In an example, an ingress POP in the backbone network may orchestrate an end-to-end path from the ingress POP to an egress POP. After arriving at the ingress POP, the service traffic is forwarded to the egress POP through the end-to-end path, and is further forwarded to a destination device through the egress POP. In another example, the CPE may compute an end-to-end path that carries the service. For example, in the scenario shown in FIG. 1b, the edge 1 computes an end-to-end path from the edge 1 to the edge 2. In another example, a controller may centrally orchestrate a path in an entire network. For example, the controller centrally orchestrates the end-to-end path from the ingress POP to the egress POP. For another example, the controller centrally orchestrates the end-to-end path across the backbone network between two CPEs.

Currently, during service path orchestration, path orchestration may be performed with reference to information such as parameter values such as a cost (cost) and a delay of a link. However, in this manner, a path obtained through orchestration usually cannot meet a service requirement.

To resolve the foregoing problems, embodiments of this application provide an information processing method.

For ease of understanding this solution, related technologies that may be used in this application are first described.

### 1. BGP

The BGP is a dynamic routing protocol used between autonomous systems (autonomous system, AS). As an external routing protocol standard of the internet, the BGP is widely used between internet service providers (internet service provider, ISP). Currently, multi-protocol extensions for the BGP (Multi-Protocol Extensions for BGP, MP-BGP) that are extended based on a BGP-4 (BGP-4) are widely used.

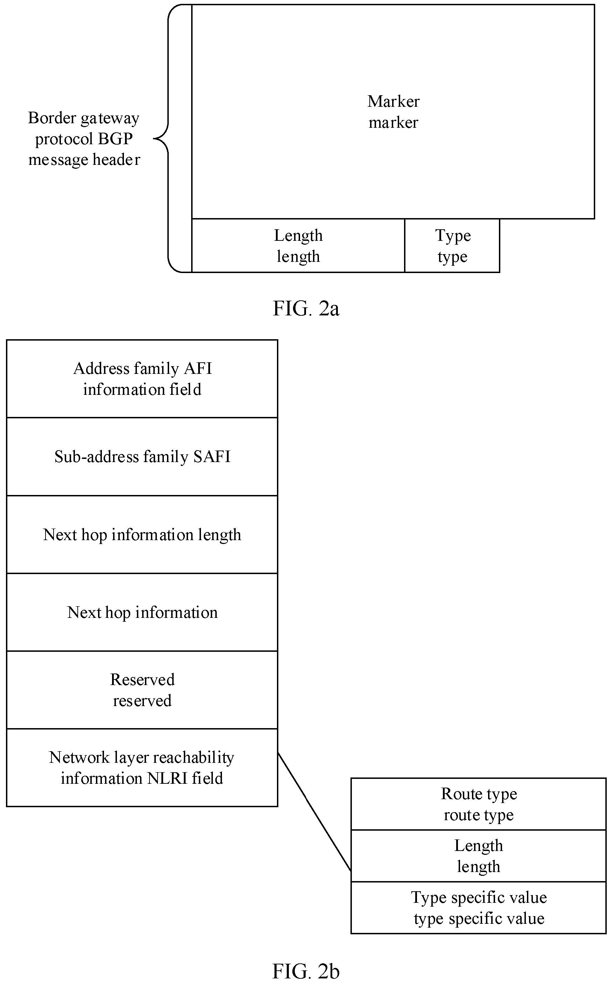

A BGP message includes a BGP message header and message content. As shown in Table 1, the BGP has five message types shown in Table 2, and the five message types have a same BGP message header. These messages are transmitted based on a transmission control protocol (Transmission Control Protocol, TCP). A maximum length of the message is 65535 bytes, and a minimum length (including only the BGP message header) is 19 bytes. The BGP message header may be shown in FIG. 2a. FIG. 2a is a diagram of a structure of the BGP message header according to an embodiment of this application. As shown in FIG. 2a, the BGP message header includes three parts: a marker (marker) field, a length field, and a type (type) field. The three parts of the BGP message header may be understood with reference to Table 1.

**Table 1**

| Field name | Length | Meaning |
|---|---|---|
| marker | 16 bytes | Used to check whether synchronization information of a BGP peer is complete and used for BGP authentication computation. When authentication is not used, all bits are 1 (all bits are "FF" in hexadecimal format). |
| length | 2 bytes | A total length of a BGP message (including a message header) in bytes. The length ranges from 19 bytes to 65535 bytes. |
| type | 1 byte | BGP message type. Type has five optional values, indicating five types of messages following a BGP message header. Values of type may be understood with reference to Table 2. |

**Table 2**

| Value of type | Message type |
|---|---|
| 1 | open |
| 2 | update |
| 3 | notification |
| 4 | keepalive |
| 5 | route refresh |

Specifically:
The BGP open message, the BGP notification message, and the BGP keepalive message are not described in detail herein.

The BGP update message is used to advertise a route.

In an example, the route may be advertised between communication apparatuses by using the MP-BGP. Specifically, the BGP message that is exchanged between the communication apparatuses and that is used to advertise the route includes multi-protocol reachable network layer reachability information (Multi-Protocol reach network layer reachability information, MP_REACH_NLRI), and the MP_REACH_NLRI is used to carry the route. In an example, a structure of the MP_REACH_NLRI is shown in FIG. 2b. FIG. 2b is a diagram of a structure of the MP_REACH_NLRI according to an embodiment of this application. As shown in FIG. 2b, the MP_REACH_NLRI includes an address family identifier (address family identifier, AFI), a sub-address family identifier (subsequent address family identifier, SAFI), a next hop information length field, a next hop information field, and an NLRI field.

As an example, the AFI field may identify a network layer protocol. For example, when a value of the AFI field is 1, an IPv4 is identified; and when the value of the AFI field is 2, an IPv6 is identified. For the value of the AFI field, refer to related description of an address family number (Address Family Number) in RFC 1700. Details are not described herein. The SAFI field identifies a type of a sub-address family. For example, when a value of the SAFI field is 1, unicast is identified; when the value of the SAFI field is 2, multicast is identified; when the value of the SAFI field is 74, an SD-WAN is identified; and when the value of the SAFI field is 128, a virtual private network (virtual private network, VPN) is identified.

In an example, a next-hop network address may be a network address of a next device on a path to a destination device.

In an example, the NLRI field may include one or more pieces of NLRI, each piece of NLRI includes a length field and an NLRI value field, and specific content of the NLRI value may be determined based on a combination of the AFI field and the SAFI field.

The NLRI information field includes a route type field, a length field, and a type specific value (type specific value) field. The route type field indicates a route type, the length field is a length of the type specific value field, and the type specific value field is used to carry a related value of the type corresponding to the route type field.

The BGP route refresh message may include a plurality of types of messages, and one of the types of messages is a BGP ORF message.

The following about the BGP ORF message should be noted.

A prefix-based ORF capability of the BGP is specified in RFC 5291 and RFC 5292 and allows a prefix-based inbound policy configured on a local end device to be sent to a BGP peer by using the route refresh message. The BGP peer constructs an outbound policy based on the policy and filters routes before route sending. This prevents the local end device from receiving a large quantity of useless routes, reduces usage of a central processing unit (central processing unit, CPU) of the local end device, reduces configuration workload of the BGP peer effectively, and reduces link bandwidth occupation. For example, a communication apparatus A and a communication apparatus B establish a direct BGP peer relationship. After the communication apparatus A and the communication apparatus B negotiate a prefix-based ORF capability, the communication apparatus A sends a locally configured prefix-based inbound policy to the communication apparatus B by using a route refresh message. The communication apparatus B constructs an outbound policy based on the received route refresh message. The communication apparatus A receives only a route required by the communication apparatus A, and the communication apparatus B does not need to maintain a routing policy, so that configuration workload is reduced.

### 2. BGP LS

The BGP-LS is a network topology collection manner, and makes topology collection simpler and more efficient.

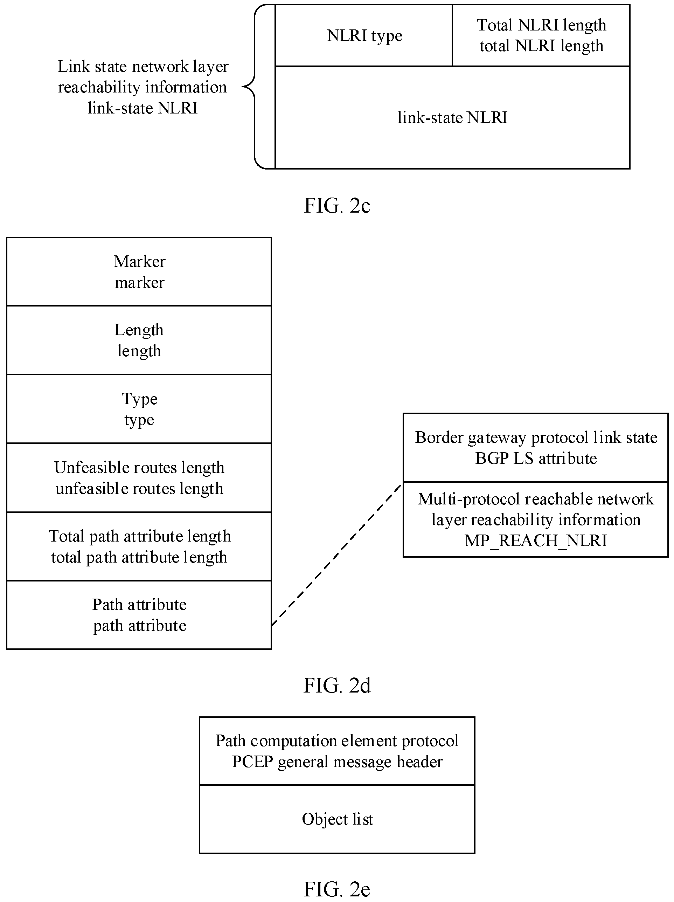

BGP-LS introduces a series of new pieces of NLRI to carry information about a link, a node, and an IPv4 prefix or an IPv6 prefix based on an original BGP. The new NLRI is called link-state (link-state) NLRI. In an example, the BGP-LS uses an MP_REACH_NLRI attribute as a container of the link-state NLRI. In other words, the link-state NLRI is carried in a BGP update message as the MP_REACH_NLRI attribute. FIG. 2c is a diagram of a structure of the link-state NLRI according to an embodiment of this application. As shown in FIG. 2c, the link-state NLRI includes an NLRI type field, a total NLRI length (total NLRI length) field, and a link-state NLRI field. Specifically:

The NLRI type field indicates an NLRI type, and may be understood with reference to Table 3 below.

The total NLRI length field indicates a length of the entire NLRI.

The link-state NLRI field is used to carry specific content, and content of the link-state NLRI field is determined based on a value of the NLRI type field.

**Table 3**

| Value of NLRI type | Link-state NLRI type |
|---|---|
| 1 | Node (node) NLRI |
| 2 | Link (link) NLRI |
| 3 | IPv4 topology prefix (Topology Prefix) NLRI |
| 4 | IPv6 topology prefix (Topology Prefix) NLRI |

### 3. BGP-LS-SPF address family

The BGP-LS-SPF address family may also be referred to as a BGP-SPF address family. The BGP-SPF address family is a new address family with a Link-state AFI. The new sub-address family is a combination of an LS address family and an SPF sub-address family.

A SAFI value of the BGP-SPF address family is 80.

NLRI types defined by the BGP-SPF address family are still the node NLRI, the link NLRI, the IPv4 topology prefix NLRI, and the IPv6 topology prefix NLRI shown in Table 4.

Each communication apparatus with an enabled BGP-LS-SPF address family needs to unconditionally generate one piece of node NLRI. A specific format of the node NLRI is not described in detail herein.

For the communication apparatus with the enabled BGP-LS-SPF address family, the communication apparatus generates link NLRI for link information of the communication apparatus, and advertises the link NLRI to another communication apparatus. A format of the link NLRI complies with a definition in RFC 7752. Details are not described herein.

A BGP route update message of the BGP-LS-SPF address family carries a plurality of path attributes. One of the path attributes is BGP-LS attribute, and BGP-LS attribute is defined in RFC 7752. One or more TLVs that are used to describe nodes, links, or prefixes may be carried in the attribute BGP-LS attribute. As described above, the BGP message also includes MP_REACH_NLRI, and the MP_REACH_NLRI is defined in RFC 4760. When an AFI of the MP_REACH_NLRI is 16388 and a SAFI is 80, it indicates that the message is a BGP route update message of a BGP-LS-SPF address family. In addition, as shown in Table 4, when an NLRI type value in the MP_REACH_NLRI is 2, it indicates that NLRI included in the BGP route update message of the BGP-LS-SPF address family is the link NLRI.

For the BGP route update message that is of the BGP-LS-SPF address family and that includes the link NLRI, and the link NLRI of the BGP route update message may include a link description TLV. The link description TLV may include one or more TLVs that describe links, for example, may include a local end address TLV and a neighbor address TLV, where the local end address TLV is used to carry an IP address of a local end, and the neighbor address TLV is used to carry an IP address of a peer end, and is used to identify a link between the local end and the peer end. In an example, the local end address TLV may be an IPv6 interface address TLV (IPv6 interface address TLV), and a peer end address TLV may be an IPv6 neighbor address TLV (IPv6 neighbor address TLV).

The following describes a structure of the BGP route update message that is of the BGP-LS-SPF address family and that includes the link NLRI with reference to FIG. 2d. FIG. 2d is a diagram of a structure of the BGP route update message according to an embodiment of this application.

As shown in FIG. 2d, the BGP route update message includes: a marker (marker) field, a length field, a type field, an unfeasible routes length (unfeasible routes length) field, a total path attribute length (total path attribute length) field, and a path attribute field. The path attribute field may carry a plurality of BGP path attributes, the plurality of BGP path attributes may include at least: a BGP LS attribute and MP_REACH_NLRI, and the MP_REACH_NLRI may include at least the link description TLV. In this embodiment of this application, a value carried in the unfeasible routes length field may be 0.

### 4. SD-WAN TNP

When an address family of the BGP route refresh message is an SD-WAN address family or a sub-address family of the BGP route refresh message is an SD-WAN sub-address family, and a value of the route type field shown in FIG. 2b is 1, the BGP route refresh message may be referred to as an SD-WAN TNP route advertisement message, and is used to advertise an SD-WAN TNP route. In this case, the NLRI field shown in FIG. 2b may be used to carry information about the SD-WAN TNP route. The information about the TNP route is not described in detail herein.

### 5. PCEP

A PCEP message includes: a PCEP request message and a PCEP response message. Structures of the PCEP request message and the PCEP response message are both shown in FIG. 2e. FIG. 2e is a diagram of a structure of the PCEP message according to an embodiment of this application. The PCEP message shown in FIG. 2e includes a PCEP general message header and an object (object) list. For the PCEP general message header, refer to related descriptions in RFC 5440. Details are not described herein. The object list is used to carry one or more objects.

Specifically:
The PCEP request message may be used to request an apparatus (for example, a controller or a POP) to compute a path. After performing path computation, the apparatus may return a PCEP response message corresponding to the PCEP request message.

The PCEP request message needs to carry a request parameter (request parameter, RP) object, an END-POINTS (END-POINTS) object, and some other optional objects, such as a label switched path attribute (label switched path attribute, LSPA) object, a record route object (record route object, RRO), and an include route object (include route object, IRO) object.

The PCEP response message needs to carry the RP object. If path computation succeeds, the PCEP response message may carry an explicit route object (explicit route object, ERO) object. If path computation fails, the PCEP response message may carry a NO-PATH (NO-PATH) object. The PCEP response message further has some other optional objects, such as an LSPA object and an IRO object.

For objects included in the PCEP request message and the PCEP response message, refer to related descriptions in RFC 5440. Details are not described herein.

### 6. OMP message

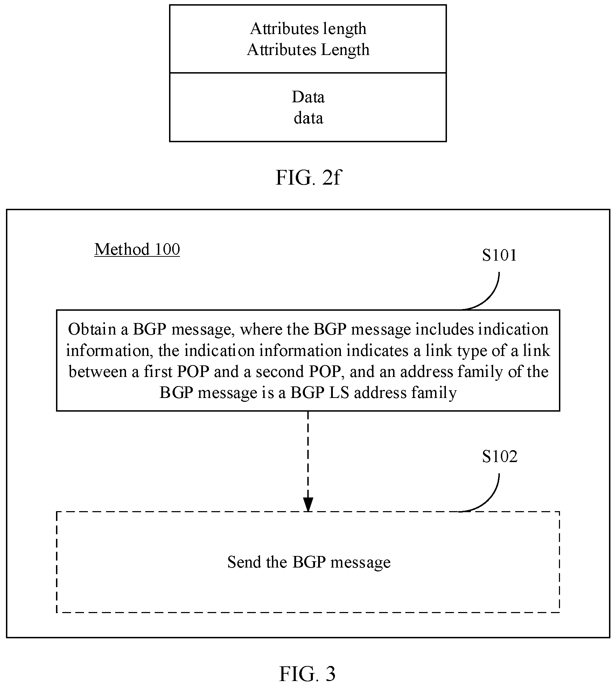

The OMP message is used to advertise an OMP route. A message structure of the OMP message may be shown in FIG. 2f. FIG. 2f is a diagram of a structure of the OMP message according to an embodiment of this application. As shown in FIG. 2f, the OMP message includes an attributes length (Attributes Length) field and a data (data) field. Specifically:
The attributes length field indicates a length of the data field: an attribute length, which is 2 bytes.

The data field is used to carry various attributes of one or more OMP routes. The attributes are carried in a TLV format.

The following describes the information processing method with reference to the accompanying drawings.

FIG. 3 is a schematic flowchart of an information processing method according to an embodiment of this application.

In an example, the method 100 shown in FIG. 3 may be applied to a first POP. In another example, the method 100 shown in FIG. 3 may be applied to a controller.

The method 100 shown in FIG. 3 may include S101.

S101: Obtain a BGP message, where the BGP message includes indication information, the indication information indicates a link type of a link between the first POP and a second POP, and an address family of the BGP message is a BGP LS address family.

When the method 100 is applied to the first POP, during specific implementation of S101, the link type of the link between the first POP and the second POP may be first determined, and then the BGP message is generated based on the link type of the link.

For the first POP and the second POP, the network scenario shown in FIG. 1b is used as an example, and the first POP may be a POP 1 shown in FIG. 1b, and the second POP may be a POP 2 shown in FIG. 1b. Alternatively, the first POP may be the POP 2 shown in FIG. 1b, and the second POP may be the POP 1, a POP 5, a POP 6, a POP 7, a POP 3, or a POP 8 shown in FIG. 1b. Details are not described herein.

As an example, after generating the BGP message, the first POP may perform S102.

S102: Send the BGP message.

In an example, during specific implementation of S102, the BGP message may be sent to another POP in the backbone network. In another example, during specific implementation of S102, the BGP message may be sent to the controller.

When the method 100 is applied to the controller, during specific implementation, S101 may be receiving the BGP message sent by the first POP.

In an example, the link type indicated by the indication information may be: an overlay link, an underlay link, a direct link, a private line, an MPLS link, an SRv6 link, an internet link, a 4G link, a 5G link, or a 5G+ link. The 5G+ link is a link to which a technology obtained after the 5G technology is further developed is applied. 5G+ may include 6G.

The direct link and the private line are underlay links. The MPLS link, the SRv6 link, the internet link, the 4G link, the 5G link, or the 5G+ link is an overlay link. When the link type indicated by the indication information is the MPLS link, the SRv6 link, the internet link, the 4G link, the 5G link, or the 5G+ link, the indication information may naturally indicate that the link type of the link between the first POP and the second POP is the overlay link. When the link type indicated by the indication information is the direct link or the private line, the indication information may naturally indicate that the link type of the link between the first POP and the second POP is the underlay link.

A sub-address family of the BGP message is not specifically limited in this embodiment of this application. The sub-address family of the BGP message may be any sub-address family of the BGP LS address family. In an example, considering that link NLRI of a BGP-LS-SPF address family may be used to advertise link information, in a specific example, the sub-address family of the BGP message may be an SPF sub-address family. In other words, in this embodiment of this application, the feature that BGP-LS-SPF can advertise link information is still used, and the BGP message of the BGP-LS-SPF address family is used to carry the indication information.

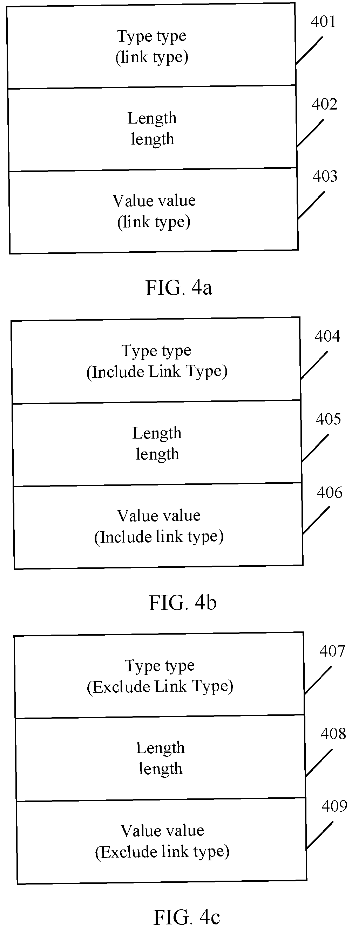

When the sub-address family of the BGP message is the SPF sub-address family, the BGP message may include a link type TLV, and the link type TLV is used to carry the indication information. A format of the link type TLV may be understood with reference to FIG. 4a. FIG. 4a is a diagram of a structure of the link type TLV according to an embodiment of this application. As shown in FIG. 4a, the link type TLV may include a type field 401, a length field 402, and a value field 403. The type field 401 indicates that a type of the TLV is the link type TLV, the length field 402 indicates a length of the value field 403, and the value field 403 is used to carry the indication information.

In an example, the BGP message may include a BGP path attribute, and the link type TLV may be carried in the BGP path attribute. In other words, the BGP path attribute may include the link type TLV. The BGP path attribute is not specifically limited in this embodiment of this application. In a specific example, the BGP path attribute may be a BGP LS attribute. In this case, the link type TLV may be carried in the BGP LS attribute shown in FIG. 2d.

In an example, the BGP message may include MP_REACH_NLRI, the MP_REACH_NLRI may include a link description TLV, and the link type TLV may be carried in the link description TLV. In this case, the link type TLV may be carried in the link description TLV shown in FIG. 2d. In other words, in addition to a local end address TLV and a neighbor address TLV, the link type TLV may further include the link description TLV that indicates the link type of the link.

In this embodiment of this application, to better meet a service requirement, when the first POP or the controller computes a service path for a service, computation may be performed with reference to path computation constraint information. The path computation constraint information indicates a requirement for a link type of a link to a destination network prefix. The service path to the destination network prefix may include a plurality of links, and the path computation constraint information may indicate a requirement for link types of a plurality of links to the destination network prefix. In a specific example, the controller or the first POP may receive the path computation constraint information, and further determine, based on the path computation constraint information, the path to the destination network prefix.

In an example, when the method 100 is applied to the controller, the controller may receive, for example, the path computation constraint information sent by the first POP or a CPE, to compute, based on the path computation constraint information, the service path to the destination network prefix. In other words, the first POP or the CPE may obtain the path computation constraint information, and send the path computation constraint information to the controller.

In another example, when the method 100 is applied to the first POP, the first POP may receive, for example, the path computation constraint information sent by the CPE. As an example, the first POP may compute, based on the path computation constraint information, the service path to the destination network prefix. As another example, after receiving the path computation constraint information, the first POP may send the path computation constraint information to the controller, and the controller computes, based on the path computation constraint information, the service path to the destination network prefix.

In a specific example, the requirement for the link type of the link to the destination network prefix may include: a link type that needs to be included in the link to the destination network prefix. For example, when the service has a high requirement on service quality, the requirement may be, for example, a private line that needs to be included in the link to the destination network prefix. In this manner, the link type that needs to be included in the link to the destination network prefix may be specified, so that when computing the service path, the first POP or the controller obtains, through computation to the greatest extent, a service path of a link that includes the link type that needs to be included. In this way, a service requirement is met.

In another specific example, the requirement for the link type of the link to the destination network prefix may include: a link type that needs to be excluded from the link to the destination network prefix. For example, when the service has a high requirement on service quality, the requirement may be, for example, an internet link that needs to be excluded from the link to the destination network prefix. In this manner, the link type that needs to be excluded from the link to the destination network prefix may be specified, so that when computing the service path, the first POP or the controller obtains, through computation to the greatest extent, a service path of a link that does not include the link type that needs to be excluded. In this way, a service requirement is met.

In an example, if the requirement includes the link type that needs to be included in the link to the destination network prefix, the path computation constraint information may include a first TLV. The first TLV may be, for example, an include link-type TLV, and the first TLV indicates the link type that needs to be included in the link to the destination network prefix.

The first TLV may be understood with reference to FIG. 4b. FIG. 4b is a diagram of a structure of the first TLV according to an embodiment of this application. As shown in FIG. 4b, the first TLV includes a type field 404, a length field 405, and a value field 406. The type field 404 indicates that a type of the TLV is the include link-type TLV, the length field 405 indicates a length of the value field 406, and the value field 406 is used to carry the link type that needs to be included.

In another example, if the requirement includes the link type that needs to be excluded from the link to the destination network prefix, the path computation constraint information may include a second TLV. The second TLV may be, for example, an exclude link-type TLV, and the second TLV indicates the link type that needs to be excluded from the link to the destination network prefix.

The second TLV may be understood with reference to FIG. 4c. FIG. 4c is a diagram of a structure of the second TLV according to an embodiment of this application. As shown in FIG. 4c, the second TLV includes a type field 407, a length field 408, and a value field 409. The type field 407 indicates that a type of the TLV is the exclude link-type TLV, the length field 408 indicates a length of the value field 409, and the value field 409 is used to carry the link type that needs to be excluded.

In an implementation, the path computation constraint information may be carried in an SD-WAN TNP route advertisement message. In other words, during specific implementation of receiving a route advertisement message, the SD-WAN TNP route advertisement message may be received, and the SD-WAN TNP route advertisement message includes the path computation constraint information. For example, the SD-WAN TNP route advertisement message includes the first TLV and/or the second TLV.

A location at which the path computation constraint information is carried in the SD-WAN TNP route advertisement message is not specifically limited in this embodiment of this application. In a specific example, the path computation constraint information may be carried in an extended port attribute sub-TLV in the SD-WAN TNP route advertisement message. Specifically, the first TLV and/or the second TLV may be used as a sub-sub-TLV of the extended port attribute sub-TLV. In another specific example, the SD-WAN TNP route advertisement message may include a first metadata path attribute, and the first TLV and/or the second TLV may be carried in the first metadata path attribute.

In another implementation, the path computation constraint information may be carried in a PCEP message, for example, may be carried in a PCEP request message. In other words, during specific implementation of receiving a route advertisement message, the PCEP message may be received, and the PCEP message includes the path computation constraint information. For example, the PCEP message includes the first TLV and/or the second TLV. In a specific example, the PCEP message may include a first object and/or a second object, the first object is used to carry the first TLV, and the second object is used to carry the second TLV. The first object and the second object may be newly extended objects. In other words, in this embodiment of this application, one or two new PCEP objects (namely, the first object and the second object) may be extended in the PCEP message to carry the first TLV and the second TLV. In another specific example, the first TLV and the second TLV may be carried in an existing PCEP object. In a specific example, the existing PCEP object may be extended to carry the first TLV and the second TLV.

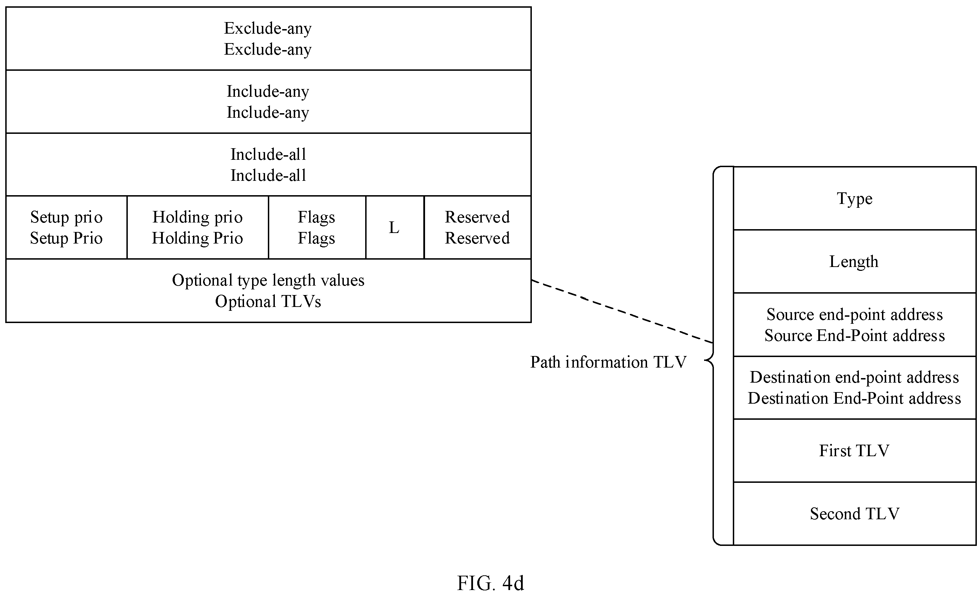

As a specific example, an LSPA object may be extended, and an extended LSPA object is used to carry the first TLV and the second TLV. Refer to FIG. 4d for understanding. FIG. 4d is a diagram of a structure of the LSPA object according to an embodiment of this application. As shown in FIG. 4d, the LSPA object includes: an exclude-any (Exclude-any) field, an include-any (Include-any) field, an include-all (Include-all) field, a setup prio (Setup Prio) field, a holding prio (Holding Prio) field, a flags (Flags) field, an L flag bit, a reserved (Reserved) field, and an optional TLVs (Optional TLVs) field. For the exclude-any field, the include-any field, the include-all field, the setup prio field, the holding prio field, the flags field, the L flag bit, and the reserved field in the LSPA object, refer to related descriptions in RFC 5440. Details are not described herein.

In an example, the optional TLVs field may be extended to carry the first TLV and the second TLV. Specifically, a path information (path information) TLV may be carried in the optional TLVs field. A structure of the path information TLV may be shown in FIG. 4d, and includes: a type field, a length field, a source end-point address (Source End-Point address) field, a destination end-point address (Destination End-Point address) field, the first TLV field, and the second TLV field. Specifically:

The source end-point address field is used to carry an address of a source endpoint of a path requested to be computed, and the destination end-point address field is used to carry a destination address (for example, the destination network prefix) of the path requested to be computed. Optionally, the path information TLV may further include a path identifier (path ID) field, to indicate an identifier of the path requested to be computed.

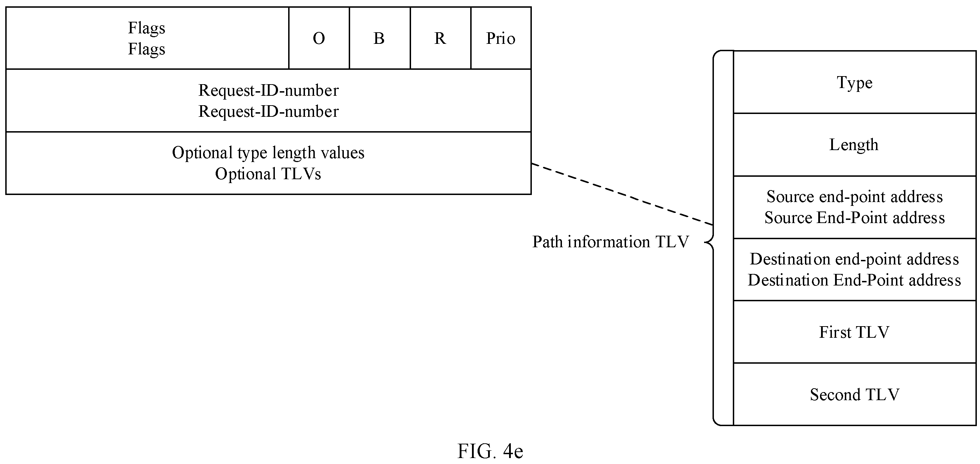

As another example, an RP object may be extended, and an extended RP object is used to carry the first TLV and the second TLV. Refer to FIG. 4e for understanding. FIG. 4e is a diagram of a structure of the RP object according to an embodiment of this application. As shown in FIG. 4e, the RP object includes: a flags (Flags) field, an O indication bit, a B indication bit, an R indication bit, a prio (Prio) indication bit, a request-ID-number (Request-ID-number) field, and an optional TLVs (Optional TLVs) field. For the flags field, the O indication bit, the B indication bit, the R indication bit, the prio indication bit, and the request-ID-number field in the RP object, refer to related descriptions in RFC 5440. Details are not described herein.

In an example, the optional TLVs field in the RP object may be extended to carry the first TLV and the second TLV. Specifically, a path information (path information) TLV may be carried in the optional TLVs field. A structure of the path information TLV is the same as that of the path information TLV shown in FIG. 4d. Details are not described herein again.

In still another implementation, the path computation constraint information may be carried in a BGP ORF message. In other words, during specific implementation of receiving a route advertisement message, the BGP ORF message may be received, and the BGP ORF message includes the path computation constraint information. For example, the BGP ORF message includes the first TLV and/or the second TLV. In a specific example, the BGP ORF message may include a second metadata path attribute, and the first TLV and/or the second TLV may be carried in the second metadata path attribute.

In yet another implementation, the path computation constraint information may be carried in an OMP message. In an example, the first TLV and the second TLV may be carried in the data field of the OMP message shown in FIG. 2f.

The foregoing describes the information processing method provided in embodiments of this application. The following describes a possible implementation of embodiments of this application with reference to the application scenario shown in FIG. 1b.

As shown in FIG. 1b, each POP in the backbone network advertises a link type of a link connected to the POP to another POP in the backbone network by using a BGP message. An address family of the BGP message may be a BGP LS address family, and a sub-address family is an SPF sub-address family. The POP may directly advertise the link type of the link connected to the POP to a BGP peer of the POP or advertise the link type to another POP by using a route reflector (route reflector, RR). In this manner, each POP in the backbone network obtains a link type of each link in the backbone network.

The site edge 1 may send path computation constraint information to the POP 1, to request the POP 1 to compute a service path from the POP 1 to the site edge 2. The POP 1 may compute a corresponding service path with reference to the link type of each link in the backbone network, for example, compute a service path that meets the path computation constraint information.

Based on the information processing method provided in the foregoing embodiments, an embodiment of this application further provides a corresponding apparatus. The following describes the apparatus with reference to the accompanying drawings.

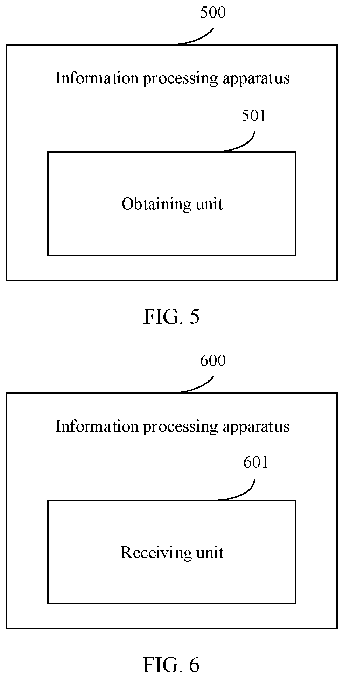

FIG. 5 is a diagram of a structure of an information processing apparatus according to an embodiment of this application. The information processing apparatus 500 in FIG. 5 may be configured to perform the method 100. Specifically, the apparatus 500 may include: an obtaining unit 501.

The obtaining unit 501 is configured to obtain a border gateway protocol BGP message, where the BGP message includes indication information, the indication information indicates a link type of a link between a first point of presence POP and a second POP, and an address family of the BGP message is a BGP link state LS address family.

In a possible implementation, the obtaining unit 501 may be specifically a receiving unit, configured to receive the BGP message.

In another possible implementation, the obtaining unit 501 may be specifically a processing unit, configured to generate the BGP message.

In a possible implementation, the indication information indicates that the link type is: an overlay overlay link, an underlay underlay link, a direct link, a private line, a multi-protocol label switching MPLS link, a segment routing over internet protocol version 6 SRv6 link, an internet internet link, a 4th-generation mobile communication technology 4G link, a 5th-generation mobile communication technology 5G link, or a 5th-generation mobile communication technology plus 5G+ link.

In a possible implementation, a sub-address family of the BGP message is a shortest path first SPF sub-address family.

In a possible implementation, the BGP message includes a link type type length value TLV, and the link type TLV includes the indication information.

In a possible implementation, the BGP message includes a BGP LS attribute, and the BGP LS attribute includes the link type TLV.

In a possible implementation, the apparatus is used in the first POP or a controller.

In a possible implementation, when the obtaining unit 501 is specifically the receiving unit, the receiving unit is further configured to: receive path computation constraint information, where the path computation constraint information indicates a requirement for a link type of a link to a destination network prefix.

In a possible implementation, when the obtaining unit 501 is specifically the processing unit, the apparatus further includes a receiving unit, configured to: receive path computation constraint information, where the path computation constraint information indicates a requirement for a link type of a link to a destination network prefix.

In a possible implementation, the apparatus is used in the first POP, and the apparatus further includes: a sending unit, configured to send information about the destination network prefix and the link type requirement to a controller.

In a possible implementation, the requirement includes: a link type that needs to be included in the link to the destination network prefix, and/or a link type that needs to be excluded from the link to the destination network prefix.

In a possible implementation, the path computation constraint information includes an include link-type TLV and/or an exclude link-type TLV, the include link-type TLV indicates the link type that needs to be included in the link to the destination network prefix, and the exclude link-type TLV indicates the link type that needs to be excluded from the link to the destination network prefix.

In a possible implementation, the receiving unit is specifically configured to: receive a software-defined wide area network transport network port SD-WAN TNP route advertisement message, where the SD-WAN TNP route advertisement message includes the path computation constraint information.

In a possible implementation, the SD-WAN TNP route advertisement message includes an extended port attribute sub-TLV, and the extended port attribute sub-TLV includes the path computation constraint information.

In a possible implementation, the SD-WAN TNP route includes a first metadata path attribute, and the first metadata path attribute includes the path computation constraint information.

In a possible implementation, the receiving unit is specifically configured to: receive a path computation element protocol PCEP message, where the PCEP message includes the path computation constraint information.

In a possible implementation, the receiving unit is specifically configured to: receive a BGP outbound route filter ORF message, where the BGP ORF message includes the path computation constraint information.

In a possible implementation, the receiving unit is specifically configured to: receive an overlay management protocol OMP message, where the OMP message includes the path computation constraint information.

FIG. 6 is a diagram of a structure of another information processing apparatus according to an embodiment of this application. The information processing apparatus 600 in FIG. 6 may be configured to perform the method 100. Specifically, the apparatus 600 may include: a receiving unit 601.

The receiving unit 601 is configured to receive path computation constraint information, where the path computation constraint information indicates a requirement for a link type of a link to a destination network prefix.

For specific implementation of the receiving unit 601, refer to the descriptions of the receiving unit in the apparatus 500. Details are not described herein again.

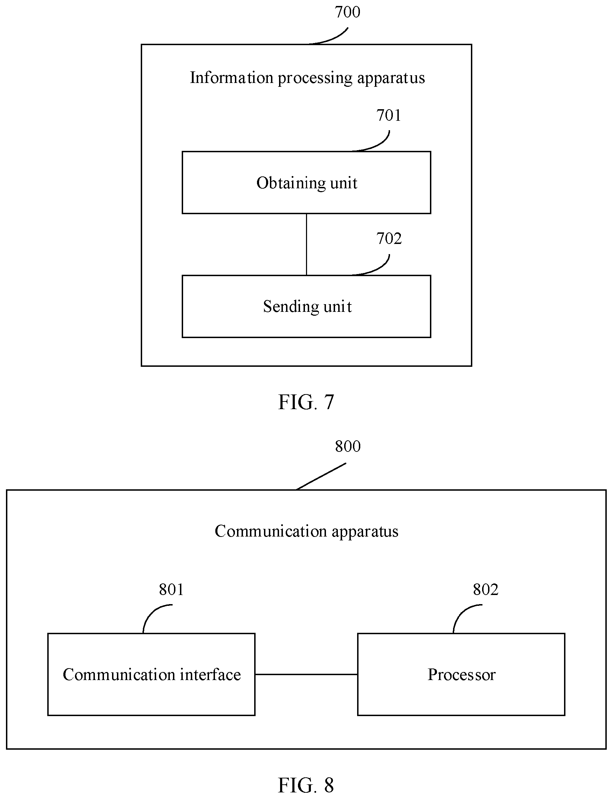

FIG. 7 is a diagram of a structure of still another information processing apparatus according to an embodiment of this application. The information processing apparatus 700 in FIG. 7 may be configured to perform some steps in the method 100. Specifically, the apparatus 700 may include: an obtaining unit 701 and a sending unit 702.

The obtaining unit 701 is configured to obtain path computation constraint information, where the path computation constraint information indicates a requirement for a link type of a link to a destination network prefix.

The sending unit 702 is configured to send the path computation constraint information.

In a possible implementation, the obtaining unit 701 may be specifically a receiving unit, configured to receive the path computation constraint information.

In another possible implementation, the obtaining unit 701 may be specifically a processing unit, configured to generate the path computation constraint information.

In addition, an embodiment of this application further provides a communication apparatus 800. FIG. 8 is a diagram of a structure of the communication apparatus according to an embodiment of this application. The communication device 800 includes a communication interface 801 and a processor 802 connected to the communication interface 801. The communication device 800 may be configured to perform the method 100 in the foregoing embodiments.

When the communication device 800 is configured to perform the method 100, the communication interface 801 is configured to perform a receiving and sending operation in the method 100. The processor 802 is configured to perform an operation other than the receiving and sending operation in the method 100. For example, the processor 802 is configured to generate a BGP message, where the BGP message includes indication information, the indication information indicates a link type of a link between a first POP and a second POP, and an address family of the BGP message is a BGP LS address family. The communication interface 801 is configured to send the BGP message.

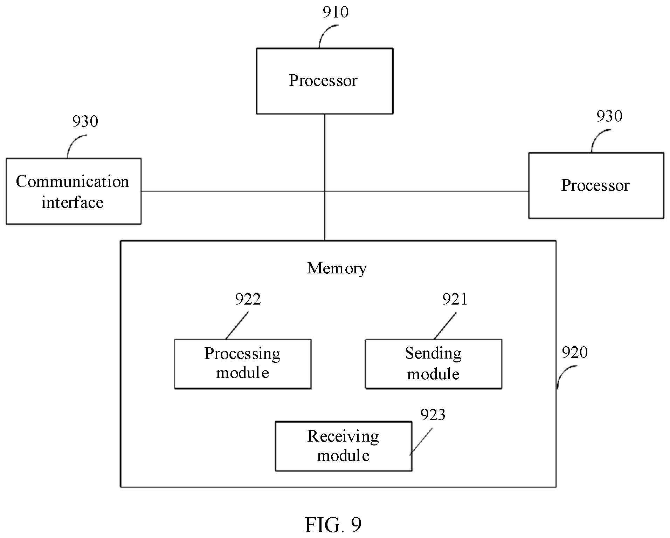

In addition, an embodiment of this application further provides a communication device 900. FIG. 9 is a diagram of a structure of a communication apparatus according to an embodiment of this application. The communication device 900 may be configured to perform the method 100 in the foregoing embodiments.

As shown in FIG. 9, the communication device 900 may include a processor 910, a memory 920 coupled to the processor 910, and a transceiver 930. The transceiver 930 may be, for example, a communication interface, an optical module, or the like. The processor 910 may be a central processing unit (English: central processing unit, CPU for short), a network processor (English: network processor, NP for short), or a combination of the CPU and the NP. Alternatively, the processor may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), generic array logic (English: generic array logic, GAL for short), or any combination thereof. The processor 910 may be one processor, or may include a plurality of processors. The memory 920 may include a volatile memory (English: volatile memory) such as a random-access memory (English: random-access memory, RAM for short); or the memory may include a non-volatile memory (English: non-volatile memory) such as a read-only memory (English: read-only memory, ROM for short), a flash memory (English: flash memory), a hard disk drive (English: hard disk drive, HDD for short), or a solid-state drive (English: solid-state drive, SSD for short); or the memory 920 may include a combination of the foregoing types of memories. The memory 920 may be one memory or may include a plurality of memories. In an implementation, the memory 920 stores computer-readable instructions, and the computer-readable instructions include a plurality of software modules, for example, a sending module 921, a processing module 922, and a receiving module 923. After executing each software module, the processor 910 may perform a corresponding operation according to an indication of each software module. In this embodiment, an operation performed by one software module is actually an operation performed by the processor 910 according to an indication of the software module.

When the communication device 900 is configured to perform the method 100, the transceiver 930 is configured to perform a receiving and sending operation in the method 100. The processor 910 is configured to perform an operation other than the receiving and sending operation in the method 100. For example, the processor 910 is configured to generate a BGP message, where the BGP message includes indication information, the indication information indicates a link type of a link between a first POP and a second POP, and an address family of the BGP message is a BGP LS address family. The transceiver 930 is configured to send the BGP message.

This application further provides a computer-readable storage medium. The computer-readable storage medium stores instructions or a computer program. When the instructions or the computer program is run on a processor, any one or more operations in the method (for example, the method 100) in the foregoing embodiments can be implemented.

This application further provides a computer program product that includes a computer program. When the computer program is run on a processor, any one or more operations in the method (for example, the method 100) in the foregoing embodiments can be implemented.

An embodiment of this application further provides a communication system, configured to perform the method in the foregoing embodiments. For example, the communication system includes a communication apparatus for obtaining and sending the BGP message and a communication apparatus for receiving the BGP message. For another example, the communication system includes a communication apparatus for obtaining and sending the path computation constraint information and a communication apparatus for receiving the path computation constraint information.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a series of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical service division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve objectives of solutions of embodiments.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in one computer-readable storage medium. Based on such an understanding, technical solutions of this application essentially, or a part contributing to a conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The storage medium includes any medium that can store program code, such as a USB flash drive, a removable hard disk drive, a read-only memory (ROM, Read-Only Memory), a random access memory (RAM, Random Access Memory), a magnetic disk, or an optical disc.

A person skilled in the art should be aware that in the foregoing one or more examples, services described in the present invention may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communication medium, where the communication medium includes any medium that enables a computer program to be transmitted from one place to another place. The storage medium may be any available medium accessible to a general-purpose or a dedicated computer.

The objectives, technical solutions, and beneficial effects of the present invention are further described in detail in the foregoing specific implementations. It should be understood that the foregoing is merely specific implementations of the present invention.

The foregoing embodiments are merely intended for describing the technical solutions of this application, but not for limiting this application. Although this application is described in detail with reference to the foregoing embodiments, a person of ordinary skill in the art should understand that the technical solutions described in the foregoing embodiments may still be modified or some technical features thereof may be equivalently replaced. These modifications or replacements do not enable essence of a corresponding technical solution to depart from the scope of the technical solutions of embodiments of this application.

## Claims

1. An information processing method, wherein the method comprises:
obtaining a border gateway protocol BGP message, wherein the BGP message comprises indication information, the indication information indicates a link type of a link between a first point of presence POP and a second POP, and an address family of the BGP message is a BGP link state LS address family.

2. The method according to claim 1, wherein the indication information indicates that the link type is:
an overlay link, an underlay link, a direct link, a private line, a multi-protocol label switching MPLS link, a segment routing over internet protocol version 6 SRv6 link, an internet link, a 4th-generation mobile communication technology 4G link, a 5th-generation mobile communication technology 5G link, or a 5th-generation mobile communication technology plus 5G+ link.

3. The method according to claim 1 or 2, wherein a sub-address family of the BGP message is a shortest path first SPF sub-address family.

4. The method according to claim 3, wherein the BGP message comprises a link type type length value TLV, and the link type TLV comprises the indication information.

5. The method according to claim 4, wherein the BGP message comprises a BGP LS attribute, and the BGP LS attribute comprises the link type TLV.

6. The method according to any one of claims 1 to 5, wherein the method is applied to the first POP or a controller.

7. The method according to any one of claims 1 to 6, wherein the method further comprises:
receiving path computation constraint information, wherein the path computation constraint information indicates a requirement for a link type of a link to a destination network prefix.

8. The method according to claim 7, wherein the method is applied to the first POP, and the method further comprises:
sending information about the destination network prefix and the link type requirement to a controller.

9. The method according to claim 7 or 8, wherein the requirement comprises:
a link type that needs to be comprised in the link to the destination network prefix, and/or a link type that needs to be excluded from the link to the destination network prefix.

10. The method according to claim 9, wherein the path computation constraint information comprises an include link-type TLV and/or an exclude link-type TLV, the include link-type TLV indicates the link type that needs to be comprised in the link to the destination network prefix, and the exclude link-type TLV indicates the link type that needs to be excluded from the link to the destination network prefix.

11. The method according to any one of claims 7 to 10, wherein the receiving the path computation constraint information comprises:
receiving a software-defined wide area network transport network port SD-WAN TNP route advertisement message, wherein the SD-WAN TNP route advertisement message comprises the path computation constraint information.

12. The method according to claim 11, wherein the SD-WAN TNP route advertisement message comprises an extended port attribute sub-TLV, and the extended port attribute sub-TLV comprises the path computation constraint information.

13. The method according to claim 11, wherein the SD-WAN TNP route comprises a first metadata path attribute, and the first metadata path attribute comprises the path computation constraint information.

14. The method according to any one of claims 7 to 10, wherein the receiving the path computation constraint information comprises:
receiving a path computation element protocol PCEP message, wherein the PCEP message comprises the path computation constraint information.

15. The method according to any one of claims 7 to 10, wherein the receiving the path computation constraint information comprises:
receiving a BGP outbound route filter ORF message, wherein the BGP ORF message comprises the path computation constraint information.

16. The method according to any one of claims 7 to 10, wherein the receiving the path computation constraint information comprises:
receiving an overlay management protocol OMP message, wherein the OMP message comprises the path computation constraint information.

17. An information processing method, wherein the method comprises:
receiving path computation constraint information, wherein the path computation constraint information indicates a requirement for a link type of a link to a destination network prefix.

18. The method according to claim 17, wherein the method is applied to a first POP, and the method further comprises:
sending information about the destination network prefix and the link type requirement to a controller.

19. The method according to claim 17 or 18, wherein the requirement comprises:
a link type that needs to be comprised in the link to the destination network prefix, and/or a link type that needs to be excluded from the link to the destination network prefix.

20. The method according to any one of claims 17 to 19, wherein the path computation constraint information comprises an include link-type TLV and/or an exclude link-type TLV, the include link-type TLV indicates the link type that needs to be comprised in the link to the destination network prefix, and the exclude link-type TLV indicates the link type that needs to be excluded from the link to the destination network prefix.

21. The method according to any one of claims 17 to 20, wherein the receiving the path computation constraint information comprises:
receiving a software-defined wide area network transport network port SD-WAN TNP route advertisement message, wherein the SD-WAN TNP route advertisement message comprises the path computation constraint information.

22. The method according to claim 21, wherein the SD-WAN TNP route advertisement message comprises an extended port attribute sub-TLV, and the extended port attribute sub-TLV comprises the path computation constraint information.

23. The method according to claim 21, wherein the SD-WAN TNP route comprises a first metadata path attribute, and the first metadata path attribute comprises the path computation constraint information.

24. The method according to any one of claims 17 to 20, wherein the receiving the path computation constraint information comprises:
receiving a path computation element protocol PCEP message, wherein the PCEP message comprises the path computation constraint information.

25. The method according to any one of claims 17 to 20, wherein the receiving the path computation constraint information comprises:
receiving a BGP outbound route filter ORF message, wherein the BGP ORF message comprises the path computation constraint information.

26. The method according to any one of claims 17 to 20, wherein the receiving the path computation constraint information comprises:
receiving an overlay management protocol OMP message, wherein the OMP message comprises the path computation constraint information.

27. An information processing method, wherein the method comprises:
obtaining path computation constraint information, wherein the path computation constraint information indicates a requirement for a link type of a link to a destination network prefix; and
sending the path computation constraint information.

28. The method according to claim 27, wherein the requirement comprises:
a link type that needs to be comprised in the link to the destination network prefix, and/or a link type that needs to be excluded from the link to the destination network prefix.

29. The method according to claim 27 or 28, wherein the path computation constraint information comprises an include link-type TLV and/or an exclude link-type TLV, the include link-type TLV indicates the link type that needs to be comprised in the link to the destination network prefix, and the exclude link-type TLV indicates the link type that needs to be excluded from the link to the destination network prefix.

30. The method according to any one of claims 27 to 29, wherein the sending the path computation constraint information comprises:
sending a software-defined wide area network transport network port SD-WAN TNP route advertisement message, wherein the SD-WAN TNP route advertisement message comprises the path computation constraint information.

31. The method according to claim 30, wherein the SD-WAN TNP route advertisement message comprises an extended port attribute sub-TLV, and the extended port attribute sub-TLV comprises the path computation constraint information.

32. The method according to claim 30, wherein the SD-WAN TNP route comprises a first metadata path attribute, and the first metadata path attribute comprises the path computation constraint information.

33. The method according to any one of claims 27 to 29, wherein the sending the path computation constraint information comprises:
sending a path computation element protocol PCEP message, wherein the PCEP message comprises the path computation constraint information.

34. The method according to any one of claims 27 to 29, wherein the sending the path computation constraint information comprises:
sending a BGP outbound route filter ORF message, wherein the BGP ORF message comprises the path computation constraint information.

35. The method according to any one of claims 27 to 29, wherein the sending the path computation constraint information comprises:
sending an overlay management protocol OMP message, wherein the OMP message comprises the path computation constraint information.

36. An information processing apparatus, wherein the apparatus comprises:
a processing unit, configured to obtain a border gateway protocol BGP message, wherein the BGP message comprises indication information, the indication information indicates a link type of a link between a first point of presence POP and a second POP, and an address family of the BGP message is a BGP link state LS address family.

37. The apparatus according to claim 36, wherein the indication information indicates that the link type is:
an overlay overlay link, an underlay underlay link, a direct link, a private line, a multi-protocol label switching MPLS link, a segment routing over internet protocol version 6 SRv6 link, an internet internet link, a 4th-generation mobile communication technology 4G link, a 5th-generation mobile communication technology 5G link, or a 5th-generation mobile communication technology plus 5G+ link.

38. The apparatus according to claim 36 or 37, wherein a sub-address family of the BGP message is a shortest path first SPF sub-address family.

39. The apparatus according to claim 38, wherein the BGP message comprises a link type type length value TLV, and the link type TLV comprises the indication information.

40. The apparatus according to claim 39, wherein the BGP message comprises a BGP LS attribute, and the BGP LS attribute comprises the link type TLV.

41. The apparatus according to any one of claims 36 to 40, wherein the apparatus is used in the first POP or a controller.

42. The apparatus according to any one of claims 36 to 41, wherein the apparatus further comprises:
a receiving unit, configured to receive path computation constraint information, wherein the path computation constraint information indicates a requirement for a link type of a link to a destination network prefix.

43. The apparatus according to claim 42, wherein the apparatus is used in the first POP, and the apparatus further comprises:
a sending unit, configured to send information about the destination network prefix and the link type requirement to a controller.

44. The apparatus according to claim 42 or 43, wherein the requirement comprises:
a link type that needs to be comprised in the link to the destination network prefix, and/or a link type that needs to be excluded from the link to the destination network prefix.

45. The apparatus according to claim 44, wherein the path computation constraint information comprises an include link-type TLV and/or an exclude link-type TLV, the include link-type TLV indicates the link type that needs to be comprised in the link to the destination network prefix, and the exclude link-type TLV indicates the link type that needs to be excluded from the link to the destination network prefix.

46. The apparatus according to any one of claims 42 to 45, wherein the receiving unit is configured to:
receive a software-defined wide area network transport network port SD-WAN TNP route advertisement message, wherein the SD-WAN TNP route advertisement message comprises the path computation constraint information.

47. The apparatus according to claim 46, wherein the SD-WAN TNP route advertisement message comprises an extended port attribute sub-TLV, and the extended port attribute sub-TLV comprises the path computation constraint information.

48. The apparatus according to claim 46, wherein the SD-WAN TNP route comprises a first metadata path attribute, and the first metadata path attribute comprises the path computation constraint information.

49. The apparatus according to any one of claims 42 to 45, wherein the receiving unit is configured to:
receive a path computation element protocol PCEP message, wherein the PCEP message comprises the path computation constraint information.

50. The apparatus according to any one of claims 42 to 45, wherein the receiving unit is configured to:
receive a BGP outbound route filter ORF message, wherein the BGP ORF message comprises the path computation constraint information.

51. The apparatus according to any one of claims 42 to 45, wherein the receiving unit is configured to:
receive an overlay management protocol OMP message, wherein the OMP message comprises the path computation constraint information.

52. An information processing apparatus, wherein the apparatus comprises:
a receiving unit, configured to receive path computation constraint information, wherein the path computation constraint information indicates a requirement for a link type of a link to a destination network prefix.

53. The apparatus according to claim 52, wherein the apparatus is used in a first POP, and the apparatus further comprises:
a sending unit, configured to send information about the destination network prefix and the link type requirement to a controller.

54. The apparatus according to claim 52 or 53, wherein the requirement comprises:
a link type that needs to be comprised in the link to the destination network prefix, and/or a link type that needs to be excluded from the link to the destination network prefix.

55. The apparatus according to any one of claims 52 to 54, wherein the path computation constraint information comprises an include link-type TLV and/or an exclude link-type TLV, the include link-type TLV indicates the link type that needs to be comprised in the link to the destination network prefix, and the exclude link-type TLV indicates the link type that needs to be excluded from the link to the destination network prefix.

56. The apparatus according to any one of claims 52 to 55, wherein the receiving unit is configured to:
receive a software-defined wide area network transport network port SD-WAN TNP route advertisement message, wherein the SD-WAN TNP route advertisement message comprises the path computation constraint information.

57. The apparatus according to claim 56, wherein the SD-WAN TNP route advertisement message comprises an extended port attribute sub-TLV, and the extended port attribute sub-TLV comprises the path computation constraint information.

58. The apparatus according to claim 56, wherein the SD-WAN TNP route comprises a first metadata path attribute, and the first metadata path attribute comprises the path computation constraint information.

59. The apparatus according to any one of claims 52 to 55, wherein the receiving unit is configured to:
receive a path computation element protocol PCEP message, wherein the PCEP message comprises the path computation constraint information.

60. The apparatus according to any one of claims 52 to 55, wherein the receiving unit is configured to:
receive a BGP outbound route filter ORF message, wherein the BGP ORF message comprises the path computation constraint information.

61. The apparatus according to any one of claims 52 to 55, wherein the receiving unit is configured to:
receive an overlay management protocol OMP message, wherein the OMP message comprises the path computation constraint information.

62. An information processing apparatus, wherein the apparatus comprises:
a processing unit, configured to obtain path computation constraint information, wherein the path computation constraint information indicates a requirement for a link type of a link to a destination network prefix; and
a sending unit, configured to send the path computation constraint information.

63. The apparatus according to claim 62, wherein the requirement comprises:
a link type that needs to be comprised in the link to the destination network prefix, and/or a link type that needs to be excluded from the link to the destination network prefix.

64. The apparatus according to claim 62 or 63, wherein the path computation constraint information comprises an include link-type TLV and/or an exclude link-type TLV, the include link-type TLV indicates the link type that needs to be comprised in the link to the destination network prefix, and the exclude link-type TLV indicates the link type that needs to be excluded from the link to the destination network prefix.

65. The apparatus according to any one of claims 62 to 64, wherein the sending unit is configured to:
send a software-defined wide area network transport network port SD-WAN TNP route advertisement message, wherein the SD-WAN TNP route advertisement message comprises the path computation constraint information.

66. The apparatus according to claim 65, wherein the SD-WAN TNP route advertisement message comprises an extended port attribute sub-TLV, and the extended port attribute sub-TLV comprises the path computation constraint information.

67. The apparatus according to claim 65, wherein the SD-WAN TNP route comprises a first metadata path attribute, and the first metadata path attribute comprises the path computation constraint information.

68. The apparatus according to any one of claims 62 to 64, wherein the sending unit is configured to:
send a path computation element protocol PCEP message, wherein the PCEP message comprises the path computation constraint information.

69. The apparatus according to any one of claims 62 to 64, wherein the sending unit is configured to:
send a BGP outbound route filter ORF message, wherein the BGP ORF message comprises the path computation constraint information.

70. The apparatus according to any one of claims 62 to 64, wherein the sending unit is configured to:
send an overlay management protocol OMP message, wherein the OMP message comprises the path computation constraint information.

71. An information processing apparatus, comprising a processor and a memory, wherein
the memory is configured to store instructions; and
the processor is configured to execute the instructions, to enable the communication apparatus to perform the method according to any one of claims 1 to 35.

72. A communication system, wherein the system comprises:
a communication apparatus that performs the method according to any one of claims 7 to 16 and a communication apparatus that performs the method according to any one of claims 27 to 35.

73. A computer-readable storage medium, comprising instructions or a computer program, wherein when the instructions or the computer program are run on a processor, the method according to any one of claims 1 to 35 is implemented.

74. A computer program product, comprising a computer program, wherein when the computer program is run on a processor, the method according to any one of claims 1 to 35 is performed.
